# EUROPÄISCHE PATENTSCHRIFT

(11) **EP 3 255 973 B1**
(45) Veröffentlichungstag und Bekanntmachung des Hinweises auf die Patenterteilung: **25.09.2019**
(21) Anmeldenummer: 16704622.6
(22) Anmeldetag: 15.02.2016
(51) Int. Cl.: A01C 23/00, A01M 7/00

(54) **VORRICHTUNG ZUM AUSBRINGEN VON FLÜSSIGKEITEN UND VERFAHREN ZUR BEWEGUNGSSTEUERUNG WENIGSTENS ZWEIER AUSLEGERARME EINER LANDWIRTSCHAFTLICHEN FELDSPRITZE**
DEVICE FOR DISCHARGING LIQUIDS, AND METHOD FOR CONTROLLING THE MOVEMENT OF AT LEAST TWO EXTENSION ARMS OF AN AGRICULTURAL FIELD SPRAYER
DISPOSITIF D'ÉPANDAGE DE LIQUIDES ET PROCÉDÉ POUR LE CONTRÔLE DU MOUVEMENT D'AU MOINS DEUX BRAS D'EXTENSION D'UN PULVÉRISATEUR AGRICOLE

(30) Priorität: 13.02.2015 DE 102015102080
(43) Veröffentlichungstag der Anmeldung: 20.12.2017
(73) Patentinhaber: HORSCH LEEB Application Systems GmbH, 94562 Oberpöring (DE)
(72) Erfinder: LEEB, Theodor, 94562 Oberpöring (DE)
(74) Vertreter: Benninger, Johannes
(86) Internationale Anmeldenummer: PCT/EP2016/053158
(87) Internationale Veröffentlichungsnummer: WO 2016/128577

(56) Entgegenhaltungen:
- US-A1- 2007 219 720
- US-A1- 2011 153 169
- US-A1- 2014 074 360

## Beschreibung

Die vorliegende Erfindung betrifft eine Vorrichtung zum Ausbringen von Flüssigkeiten sowie ein Verfahren zur Bewegungssteuerung wenigstens zweier Auslegerarme einer landwirtschaftlichen Feldspritze.

Feldspritzen und an Arbeitsmaschinen wie Traktoren angehängte Spritzgestänge weisen teilweise sehr große Arbeitsbreiten von mehr als zwanzig Metern auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben.

Bekannt sind weiterhin derartige Vorrichtungen, bei welcher der jeweilige Abstand der Auslegerarme zur Bodenfläche sensorisch erfasst wird. In Abhängigkeit der sensorischen Erfassung können die Auslegerarme sodann verschwenkt werden, um einen nach Möglichkeit gleichbleibenden bzw. homogenen Abstand der Auslegerarme zur Bodenfläche gewährleisten zu können. Die Praxis hat nun gezeigt, dass derartige Regelungen bei bestehenden Hindernissen im Arbeitsbereich Probleme mit sich bringen können. Besitzt der Arbeitsbereich Bestandslücken, so kann es sein, dass die Auslegerarme ungewollt in Richtung der Bodenfläche abtauchen. Treten Hindernisse im Arbeitsbereich auf, so wären zudem Vorrichtungen und Verfahren wünschenswert, mittels welcher Auslegerarme selbständig verschwenkt werden, um eine Kollision mit den Hindernissen zu vermeiden.

Es ist bereits bekannt, Scannereinheiten zur Identifikation eines zumindest in Fahrtrichtung liegenden Umfeldes von landwirtschaftlich eingesetzten Fahrzeugen zu nutzen, wodurch u.a. Hindernisse im Arbeitsbereich frühzeitig erkannt werden können. Ein derartiges System ist in der GB 2521343 A offenbart. Beim diesem Gegenstand ist eine Scannereinheit auf dem Dach des Selbstfahrers positioniert, so dass das dem Fahrzeug vorauseilende Umfeld erfasst werden kann. In Abhängigkeit des erfassten Umfelds kann die Höhe der Ausleger mittels einer entsprechenden Steuereinrichtung und Stellelementen eingestellt werden.

Einen ähnlichen Gegenstand offenbart auch die EP 2 944 171 A1. Der dort beschriebenen landwirtschaftlichen Maschine kann ebenfalls eine Lasereinheit zugeordnet sein, welcher das in Fahrtrichtung vorauseilende Umfeld über die gesamte Arbeitsbreite erfassen kann. In Abhängigkeit der erfassten Daten können die Ausleger mittels einer Steuereinrichtung und Stellelementen an die Bestandshöhe angepasst werden.

Beim Gegenstand der US 2014/0074360 A1 sind Sensoren zur Erfassung des Abstandes zwischen Ausleger und Pflanzenbestand und/oder Boden sowie zur Erfassung von Distanzen und/oder Hindernissen am Gestänge vorgesehen. Zusätzlich ist ein sogenanntes Look-Ahead-Modul vorgesehen, wodurch erkannt werden kann, ob die Einstellkriterien der Ausleger im Laufe der Feldfahrt angepasst werden müssen, um einen definierten Abstand zwischen Ausleger und Bestand einhalten zu können. Die Anpassung der Ausleger erfolgt dabei derart, dass diese bei Erreichen des Fahrzeuges an einem bestimmten Ort bzw. Position die richtige Einstellung aufweisen. Dies ist dadurch möglich, indem das Look-Ahead-Modul externe Informationen, wie beispielsweise GPS-Daten bezieht und zur Einstellung der Ausleger auswertet. Zur Optimierung und/oder Feinanpassung der Ausleger werden die Signale der am Gestänge vorgesehenen Sensoren herangezogen.

Eine Aufgabe der Erfindung kann aus diesem Grunde darin gesehen werden, eine entsprechende Vorrichtung sowie ein entsprechendes Verfahren zur Verfügung zu stellen, die eine verbesserte Ausrichtung von Auslegerarmen insbesondere bei Bestandslücken oder bei über den Bestand herausragenden Hindernisse besitzen. Weiterhin soll mittels der Vorrichtung und mittels des Verfahrens das Risiko einer Beschädigung der Auslegerarme während eines Arbeitsvorgangs vermindert werden.

Die obigen Aufgaben werden durch eine Vorrichtung und ein Verfahren gelöst, welche die Merkmale in den Schutzansprüchen 1 und 8 umfassen. Weitere vorteilhafte Ausgestaltungen werden durch die Unteransprüche beschrieben.

Die Erfindung betrifft eine Vorrichtung zum Ausbringen von Flüssigkeiten, wie Düngemittel oder dergleichen. Die Vorrichtung besitzt wenigstens zwei Auslegerarme mit jeweils mehreren Mitteln zum Verteilen der Flüssigkeit, welche wenigstens zwei Auslegerarme um eine oder mehrere ungefähr parallel zu einer Fahrtrichtung der Vorrichtung verlaufende Achsen schwenkbar sind. Beispielsweise können zwei oder mehrere Auslegerarme vorgesehen sein, die unabhängig voneinander um eine jeweilige Achse schwenkbar sind. Auch ist denkbar, dass wenigstens zwei Auslegerarme mechanisch miteinander gekoppelt sind bzw. mechanisch miteinander in Verbindung stehen und jeweils zeitsynchron um eine gemeinsame Achse geschwenkt werden. Ggf. kann es sich bei den wenigstens zwei Auslegerarmen um ein durchgehendes Gestänge handeln, dass zum Verschwenken der wenigstens zwei Auslegerarme um eine horizontale Achse gedreht wird. Die horizontale Achse kann in etwa mittig des Gestänges und parallel zur Fahrtrichtung orientiert sein. Auch können ein oder mehrere Auslegerarme durch mehrere Segmente ausgebildet sein bzw. mehrere Segmente umfassen, die ggf. um jeweilige parallel zur Fahrtrichtung der Vorrichtung verlaufende Achsen relativ zueinander verschwenkt werden können. Insbesondere kann das Gestänge, wie es für die vorliegende Erfindung ggf. Verwendung findet, gemäß der EP 2 186 405 A1 ausgebildet sein.

Zudem umfasst die Vorrichtung ein oder mehrere Stellglieder, die mit den wenigstens zwei Auslegerarmen in Verbindung stehen und eine Stellkraft für eine Schwenkbewegung auf die wenigstens zwei Auslegerarme übertragen können.

Die erfindungsgemäße Vorrichtung umfasst zudem ein oder mehrere erste Sensoren, mittels welcher ein relativer Ist-Abstand der wenigstens zwei Auslegerarme zu einem bodenseitigen Arbeitsbestand und/oder eine relative Neigungsposition der wenigstens zwei Auslegerarme festgestellt werden kann. Die ein oder mehreren ersten Sensoren können an den wenigstens zwei Auslegerarmen angeordnet sein. Vorstellbar ist beispielsweise, dass, wie nachfolgend noch beschrieben, die ein oder mehreren ersten Sensoren durch Ultraschallsensoren ausgebildet sind. Auch können die ein oder mehreren ersten Sensoren durch Winkelsensoren bzw. Winkelpotentiometer ausgebildet sein, welche die relative Neigungsstellung der wenigstens zwei Auslegerarme gegenüber einer Horizontalen bzw. gegenüber einem Mitteilteil, an welchem die Auslegerarme befestigt sind, feststellen können. Die Auslegerarme können ggf. am Mittelteil heb- und senkbar befestigt sein. Die Winkelpotentiometer bzw. Winkelsensoren können mit einer Steuerungseinrichtung in Verbindung stehen, wobei die Steuerungseinrichtung unter Wirkverbindung mit den Winkelsensoren den relativen Ist-Abstand der wenigstens zwei Auslegerarme zu einem bodenseitigen Arbeitsbestand feststellen kann.

Zudem sind ein oder mehrere zweite Sensoren vorgesehen, mittels welcher zumindest ein in Fahrtrichtung der Vorrichtung vorauseilendes Umgebungsprofil erfasst werden kann. Die ein oder mehreren ersten Sensoren und die ein oder mehreren zweiten Sensoren stehen mit einer Steuerungseinrichtung in Verbindung, mittels welcher unter Berücksichtigung des durch die ein oder mehreren ersten Sensoren gemessenen Ist-Abstandes und/oder der jeweiligen Neigungsposition und des durch die ein oder mehreren zweiten Sensoren erfassten Umgebungsprofils die ein oder mehreren Stellglieder für eine definierte Schwenkbewegung der wenigstens zwei Auslegerarme ansteuerbar sind.

Weiterhin sind ein oder mehrere Scanner vorgesehen, mittels welcher zumindest ein in Fahrtrichtung der Vorrichtung vorauseilendes Umfeld über die gesamte Arbeitsbreite abgetastet und erfasst wird. Über die gesamte Arbeitsbreite bedeutet, dass die ein oder mehreren Scanner einen Bereich von etwa 20 Meter nach links und rechts sowie von circa 15 Meter nach vorne erfassen können. Die ein oder mehreren Scanner sind vorzugsweise auf dem Dach des Selbstfahrers bzw. des Zugfahrzeugs positioniert, können aber auch an einer beliebig anderen Stelle des Selbstfahrers oder des Zugfahrzeugs angeordnet sein. Anhand der ermittelten Daten kann ein Flächenmodell in
Form eines Geländereliefs erstellt werden, wodurch zumindest das in Fahrtrichtung vorausliegende Umfeld einschließlich Bestandslücken, Fahrgassen, Hindernisse oder sonstige Unregelmäßigkeiten wiedergegeben wird. Zur Detektion von Unregelmäßigkeiten im Flächenmodell werden Algorithmen verwendet. Die ein oder mehreren Scanner stehen darüber hinaus mit einer Steuereinrichtung in Verbindung, mittels welcher in Abhängigkeit des erzeugten Flächenmodells die wenigstens zwei Auslegerarme voreingestellt werden. Somit besteht die Möglichkeit, die Vorrichtung so einzustellen, dass eine möglichst geringe Regelabweichung entsteht, d.h. das Gestänge-Mittelteil, der Neigungswinkel im Hangausgleich oder der Winkel zwischen den Segmenten der Flügel relativ zum Flächenmodell können eingestellt werden. Die Messwerte der ein oder mehreren ersten Sensoren dienen lediglich zur Kontrolle und können übersteuert bzw. ignoriert werden. Eine Übersteuerung der Kontrollwerte erfolgt dann, sofern die ein oder mehreren Scanner Unregelmäßigkeiten wie bspw. eine Bestandslücke in dem vorauseilenden Umfeld detektieren und bewerten. Der Fahrer muss nicht mehr aktiv eingreifen, sondern die Vorrichtung wird automatisch über diesen Bereich gesteuert. Zum definierten Verschwenken der mindestens zwei Auslegerarme stehen wenigstens zwei Regelkreissysteme nebeneinander, die jeweils im laufenden Betrieb kontinuierlich aufeinander abgeglichen werden. Die wenigstens zwei Regelsysteme setzen sich aus dem Regelkreis der ein oder mehreren Scanner und aus dem Regelkreis der ersten und/oder der zweiten Sensoren zusammen. Der Laserscanner erfasst den Bestand vor dem Fahrzeug, während die ersten Sensoren, insbesondere die Ultraschallsensoren, den Abstand zwischen Vorrichtung und Bestand messen. So kann aus der erfassten Bestandskontur und der momentanen Stellung des Gestänges der theoretische Abstand zwischen Vorrichtung und Bestand bestimmt werden. Weichen diese beiden Werte voneinander ab, hat ein Ausgleich der Differenz zwischen diesen Werten zu erfolgen.

In besonders bevorzugten Ausführungsformen umfassen die ein oder mehreren ersten Sensoren wenigstens einen Ultraschallsensor. Weiter können die ein oder mehreren zweiten Sensoren wenigstens einen Lasersensor umfassen. Die ein oder mehreren zweiten Sensoren können direkt an einem oder mehreren der wenigstens zwei Auslegerarmen und/oder an einem Zugfahrzeug angeordnet sein. Weiter können die ein oder mehreren Stellglieder durch ein oder mehrere Hydraulikzylinder ausgebildet sein. Die ein oder mehreren Scanner können dem Selbstfahrer bzw. dem Zugfahrzeug zugeordnet sein. Vorzugsweise werden die ein oder mehreren Scanner auf dem Dach des Selbstfahrers bzw. des Zugfahrzeugs positioniert. Die ein oder mehreren Scanner können aber auch an einer beliebigen anderen Stelle auf dem Selbstfahrer o.dgl. positioniert werden. Die ein oder mehreren Scanner umfassen vorzugsweise wenigstens einen Laserscanner.

Die Erfindung betrifft darüber hinaus ein Verfahren zur Bewegungssteuerung wenigstens zweier Auslegerarme einer landwirtschaftlichen Feldspritze mit einer Vorrichtung zum Ausbringen von Flüssigkeiten, wie Düngemittel oder dergleichen gemäß einem der Ansprüche 1 bis 7. Im Rahmen des Verfahrens wird zumindest das in Fahrtrichtung der Feldspritze vorauseilende Umfeld über die gesamte Arbeitsbreite abgetastet und erfasst. Dabei kann der Messstrahl seitlich abgelenkt werden, wodurch viele Messpunkte auf einer Linie vor dem Fahrzeug erfasst werden. In Abhängigkeit der erfassten Daten wird ein Flächenmodell erzeugt, welches das Geländerelief einschließlich Bestandslücken, Fahrgassen, Hindernisse oder sonstige Unregelmäßigkeiten wiedergibt. Hindernisse zeichnen sich beispielsweise in den Messdaten in der Form aus, dass sie aus der erfassten Bestandskontur herausragen. Zur Detektion von Unregelmäßigkeiten im Flächenmodell werden Algorithmen verwendet, die in der Bestandskontur bzw. im erzeugten Flächenmodell nach bspw. Hindernissen oder Bestandslücken suchen und bewerten. Anschließend kann die Feldspritze in Abhängigkeit des erzeugten Flächenmodells voreingestellt werden. Somit besteht die Möglichkeit, die Vorrichtung so einzustellen, dass eine möglichst geringe Regelabweichung entsteht. Dabei können insbesondere das Gestänge-Mittelteil, der Neigungswinkel im Hangausgleich oder der Winkel zwischen den Segmenten der Flügel relativ zum Flächenmodell eingestellt werden. Weiter kann ein definiertes Verschwenken der wenigstens zwei Auslegerarme unter Berücksichtigung des der Feldspritze vorauseilendes Umfelds beispielsweise bei einem Hindernis erfolgen. Neben der Detektion der Hindernisse bzw. der Bestandslücken im Feld erfolgt zugleich eine Bewertung. Im Rahmen einer entsprechenden Auswertung werden Faktoren wie Position und aktueller Fahrkurs bei momentanen Lenkwinkel und Geschwindigkeit, maximale Hubhöhe des Gestänges, Erfassung des Hindernisses bzw. Lücke durch den ersten und zweiten Sensor, Krümmung und Gradient berücksichtigt. Die Informationen über die detektierten Unregelmäßigkeiten im Bestand werden an die Steuerung übergeben.

Das definierte Verschwenken der wenigstens zwei Auslegerarme unterliegt einer Kontrolle über Feststellen eines relativen Ist-Abstands der wenigstens zwei Auslegerarme zu einem bodenseitigen Arbeitsbestand und/oder einer relativen Neigungsposition der wenigstens zwei Auslegerarme gegenüber einer Horizontalen und über Erfassen zumindest eines der Feldspritze in Fahrtrichtung vorauseilenden Umgebungsprofils.

Die neuartige Erfassung des Umfelds führt zu einer deutlichen Verringerung des Ist-Sollwert-Fehlers bei der Regelung der Feldspritze. Durch das Erkennen von Lücken oder Hindernissen im Bestand kann das Risiko von Schäden an der Feldspritze gesenkt werden. Im Rahmen der Detektion von Hindernissen oder Bestandslücken erfolgt eine Prüfung der Kontur auf extreme Abweichungen der Höhe gegenüber der mittleren Höhe, gegenüber extremen Gradienten und gegenüber extremen Krümmungen. Zugleich können durch den Einsatz von Laserscannern optimale Witterungsbedingungen für eine umweltgerechte Applikation tageslichtunabhängig genutzt werden.

In besonders bevorzugten Ausführungsformen kann das der Feldspritze in Fahrtrichtung vorauseilende Umgebungsprofil durch mindestens einen Lasersensor erfasst werden. Weiter kann ein Sender des Lasersensors einen zumindest näherungsweise horizontal orientierten Laserstrahl emittieren. Es kann zudem vorgesehen sein, dass der relative Ist-Abstand der wenigstens zwei Auslegerarme zum bodenseitigen Arbeitsbestand über mehrere an den wenigstens zwei Auslegerarmen angeordnete Ultraschallsensoren festgestellt wird. Weiter kann das definierte Verschwenken der wenigstens zwei Auslegerarme über ein oder mehrere hydraulische Stellglieder bewirkt werden.

Weiter kann das der Feldspritze in Fahrtrichtung vorauseilende Umfeld über die gesamte Arbeitsbreite durch mindestens einen Laserscanner abgetastet und erfasst werden. Über die gesamte Arbeitsbreite bedeutet, dass mittels des Laserscanners Bereiche von annähernd 20 Meter nach links bzw. rechts sowie von circa 15 Meter nach vorne abgetastet und erfasst werden können. Der Laserscanner ist dabei vorzugsweise dem Selbstfahrer bzw. dem Zugfahrzeug zugeordnet. In der Praxis hat es sich als vorteilhaft erwiesen, den Laserscanner auf dem Dach des Selbstfahrers bzw. des Zugfahrzeugs zu positionieren.

Mittels der erfassten Daten kann ein Flächenmodell erzeugt werden, welches das Geländerelief wiedergibt. Es können insbesondere Fahrgassen oder Unregelmäßigkeiten, wie Bestandslücken oder Hindernisse abgebildet werden.

Das erzeugte Flächenmodell kann auf einem Bildschirm ausgegeben werden. Der Bildschirm befindet sich vorzugsweise in der Fahrerkabine, so dass dem Fahrer das erzeugte Flächenmodell jederzeit zur Verfügung steht. Hindernisse können ebenfalls im Rahmen des Flächenmodells angezeigt werden. Als Hindernisse können bspw. Brunnenringe, Pfosten oder Strommasten genannt werden. Solche Unregelmäßigkeiten können durch die Verwendung von Algorithmen detektiert werden. Je nach Geländerelief kann ein Warnhinweis an den Fahrer ausgegeben werden, sofern die Bewertung eine Kollision mit dem Gestänge vorhersagt, oder es kann die Regelung der Feldspritze eingeleitet werden.

Handelt es sich bei dem Hindernis bspw. um einen Brunnenring, welcher mit geringer Höhe über den Bestand herausragt, dann wird die Regelung der Feldspritze eingeleitet. Bei diesem Fall werden insbesondere die mindestens zwei Auslegerarme, um die Höhe des Hindernisses angehoben. Nach Passieren des Hindernisses werden die Auslegerarme wieder an die Bestandshöhe entsprechend angepasst und in eine zum Bestand passende Winkellage und/oder Höhenlage gebracht. Bei einer solchen Regelung der Feldspritze über ein derartiges Hindernis wie bspw. einen Brunnenring oder dergleichen kann es von Vorteil sein, zugleich die Geschwindigkeit des Fahrzeugs zu beeinflussen, wodurch vermieden werden kann, dass der gesamte Arbeitsprozess der Feldspritze zu stark beeinflusst wird oder gar unterbrochen werden muss. Eine um einen sinnvollen Betrag reduzierte Fahrgeschwindigkeit sorgt dafür, dass die Feldspritze sicher um die Höhe des vorausliegenden Hindernisses angehoben werden kann. Drohende Kollisionen mit Hindernissen können auf diese Weise und aufgrund einer derartigen Regelung der Feldspritze noch zuverlässiger vermieden werden.

Das definierte Verschwenken der mindestens zwei Auslegerarme beruht auf einer Steuerung und einem Abgleich von wenigstens zwei Regelsystemen. Die wenigstens zwei Regelsysteme setzen sich aus dem Regelkreis des Laserscanners und aus dem Regelkreis der ersten Sensoren, insbesondere der Ultraschallsensoren zusammen. Der Laserscanner erfasst den Bestand vor dem Fahrzeug, während die Ultraschallsensoren den Abstand zwischen Gestänge und Bestand messen. So kann aus der erfassten Bestandskontur und der momentanen Stellung des Gestänges der theoretische Abstand zwischen Gestänge und Bestand bestimmt werden. Weichen diese beiden Werte voneinander ab, hat ein Ausgleich der Differenz zwischen diesen Werten zu erfolgen.

Ein Warnhinweis erscheint insbesondere dann, wenn der Laserscanner ein über den Bestand herausragendes Hindernis von besonders hoher Höhe detektiert und daraus eine Kollisionsgefahr erkennt. Bei derartigen Hindernissen reicht die Hubhöhe der Feldspritze nicht mehr aus. Vielmehr wird dem Fahrer ein Warnhinweis ausgegeben, so dass er auf das bevorstehende Hindernis aufmerksam gemacht wird. Der Fahrer ist dadurch in der Lage, rechtzeitig einen Bremsvorgang einzuleiten oder auszuweichen. Auch ein aktives Abbremsen oder Ausweichen der Maschine wäre denkbar.

Weiter sieht das Verfahren vor, dass die mindestens zwei Auslegerarme in Abhängigkeit des erzeugten Flächenmodels mittels ein oder mehrerer Scannereinheiten übersteuert werden. Vielmehr stellt das Flächenmodell und das erzeugte Geländerelief die maßgebliche Größe dar. Die Messwerte der Ultraschallsensoren werden insbesondere dann übersteuert, wenn sich im Bereich der Ultraschallsensoren eine Bestandslücke befindet. Der Fahrer muss nicht mehr aktiv eingreifen, sondern die Vorrichtung wird automatisch über diesen Bereich gesteuert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform einer erfindungsgemäßen Vorrichtung.
Figur 2 zeigt eine perspektivische Ansicht eines Selbstfahrers mit Feldspritze.

Für gleiche oder gleich wirkende Elemente der Erfindung werden identische Bezugszeichen verwendet. Ferner werden der Übersicht halber nur Bezugszeichen dargestellt, die für die Beschreibung der Figur erforderlich sind. Die dargestellte Ausführungsform stellt lediglich ein Beispiel dar, wie die Erfindung ausgestaltet sein kann und stellt keine abschließende Begrenzung dar.

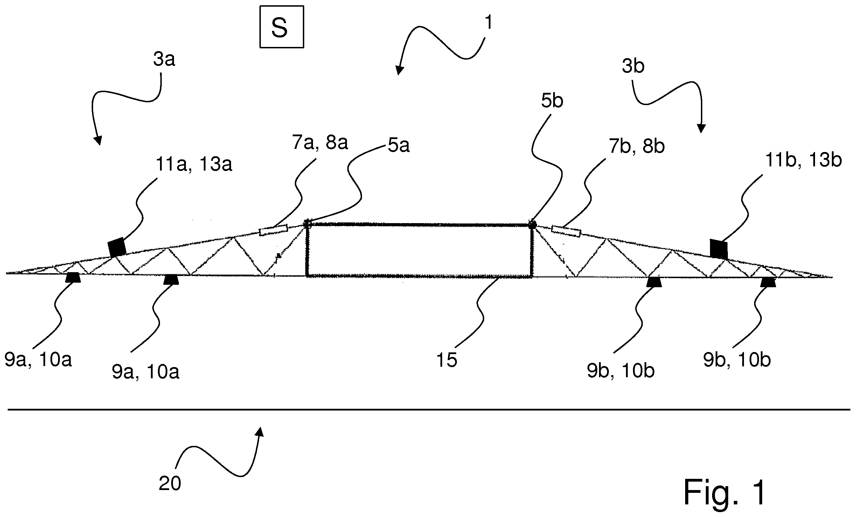

Figur 1 zeigt eine schematische Ansicht einer Ausführungsform einer erfindungsgemäßen Vorrichtung 1. Die Vorrichtung 1 ist vorgesehen zum Ausbringen von Düngemittel und umfasst zwei Auslegerarme 3a und 3b, die über eine jeweilige parallel zur Fahrtrichtung orientierte Schwenkachse 5a bzw. 5b mit einem Mittelteil 15 in Verbindung stehen. Jedem Auslegerarm 3a und 3b ist ein Stellglied 7a bzw. 7b zugeordnet, über das der jeweilige Auslegerarm 3a bzw. 3b verschwenkt werden kann. Die Stellglieder 7a bzw. 7b sind als Hydraulikzylinder 8a bzw. 8b ausgebildet.

Weiter umfasst die Vorrichtung 1 mehrere an den zwei Auslegerarmen 3a und 3b angeordnete erste Sensoren 9a und 9b, die als Ultraschallsensoren 10a und 10b ausgebildet sind. Dem ersten Auslegerarm 3a sind die Ultraschallsensoren 10a zugeordnet, dem zweiten Auslegerarm die Ultraschallsensoren 10b. Mittels der ersten Sensoren 9a und 9b bzw. mittels der Ultraschallsensoren 10a und 10b kann der jeweilige relative Abstand der Auslegerarme 3a und 3b zur Bodenfläche 20 bzw. zum jeweiligen Bestand der Bodenfläche 20 festgestellt werden.

Zudem sind mehrere zweite Sensoren 11a und 11b vorgesehen, mittels welcher zumindest ein in Fahrtrichtung der Vorrichtung 1 vorauseilendes Umgebungsprofil erfasst werden kann. Die zweiten Sensoren 11a und 11b sind jeweils als Lasersensor 13a bzw. 13b ausgebildet.

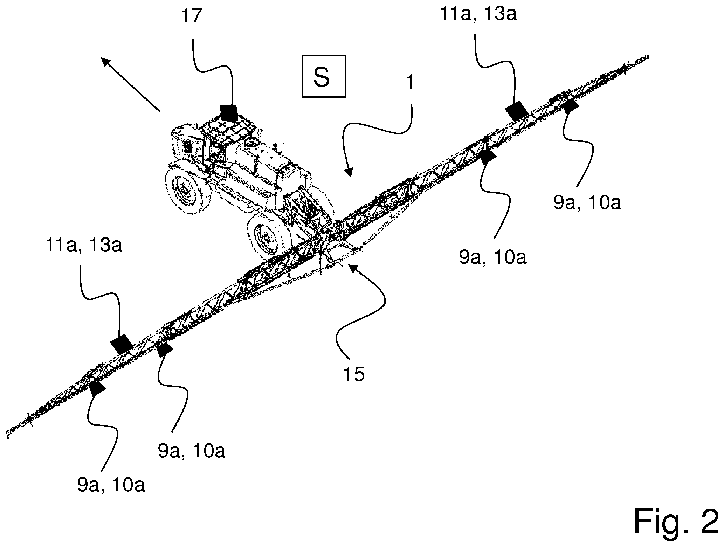

Die ersten Sensoren 9a und 9b sowie die zweiten Sensoren 11a und 11b stehen mit der Steuerungseinrichtung S in Verbindung. Mittels der Steuerungseinrichtung S können die Stellglieder 7a und 7b unter Berücksichtigung des durch die ersten Sensoren 9a und 9b gemessenen Ist-Abstandes und des durch die zweiten Sensoren 11a und 11b erfassten Umgebungsprofiles angesteuert werden, um die Auslegerarme 3a und 3b um ihre jeweilige Achse 5a bzw. 5b zu verschwenken. Diese Werte dienen lediglich der Kontrolle im Hinblick auf das Verschwenken der Vorrichtung 1. Vielmehr erfolgt die Regelung der Vorrichtung 1 nun mit Hilfe ein oder mehrere Scanner, die dem Selbstfahrer zugeordnet sind (vergleiche hierzu Figur 2).

Figur 2 zeigt eine perspektivische Ansicht eines Selbstfahrers mit Feldspritze. Dabei sind ein oder mehrere Scanner, hier in Form eines Laserscanners 17, dem Selbstfahrer zugeordnet. Vorzugsweise befindet sich der Laserscanner 17 auf dem Dach des Selbstfahrers. Mit Hilfe des Laserscanners 17 kann zumindest ein der Feldspritze in Fahrtrichtung (angegeben durch Pfeilrichtung) vorauseilendes Umfeld über die gesamte Arbeitsbreite abgetastet und erfasst werden. Der Laserscanner 17 ist in der Lage, Bereiche, die circa 20 Meter links bzw. rechts sowie circa 15 Meter nach vorne im Hinblick auf das Zugfahrzeug liegen, zu erfassen. Insgesamt kann ein Winkel von circa 180° eingeschlossen werden. Anhand der vom Laserscanner 17 ermittelten Daten kann ein Flächenmodell erstellt werden. Das Flächenmodell spiegelt zumindest das in Fahrtrichtung vorauseilende Umfeld in Form eines Geländereliefs einschließlich Bestandslücken, Fahrgassen, Hindernisse oder sonstige Unregelmäßigkeiten wieder. Der Laserscanner 17 steht ebenfalls mit der Steuereinrichtung S in Verbindung, mittels welcher in Abhängigkeit des erzeugten Flächenmodells die wenigstens zwei Auslegerarme 3a, 3b voreingestellt werden, d.h. das Mittelteil 15, der Neigungswinkel im Hangausgleich oder der Winkel zwischen den Segmenten der Flügel relativ zum Flächenmodell werden eingestellt.

Das erzeugte Flächenmodell kann auf einem Bildschirm ausgegeben werden. Der Bildschirm befindet sich vorzugsweise in der Fahrerkabine des Selbstfahrers, so dass dem Fahrer das erzeugte Flächenmodell jederzeit zur Verfügung steht. Je nach Geländerelief kann ein Warnhinweis an den Fahrer ausgegeben werden oder es kann die Regelung der Vorrichtung 1 eingeleitet werden. Unregelmäßigkeiten im Bestand können durch die Verwendung von Algorithmen detektiert werden. Ein Warnhinweis erscheint insbesondere dann, wenn der Laserscanner 17 ein über den Bestand herausragendes Hindernis von besonders hoher Höhe wie beispielsweise einen Strommasten erkennt und ein Anheben der wenigstens zwei Auslegerarme 3a, 3b um diese Höhe nicht möglich ist. Durch den Warnhinweis kann der Fahrer auf das bevorstehende Hindernis aufmerksam gemacht und ist dadurch in der Lage, rechtzeitig einen Bremsvorgang einzuleiten oder ggf. auszuweichen. Auch ein aktives Abbremsen oder Ausweichen der Maschine wäre denkbar.

Handelt es sich bei dem Hindernis bspw. um einen Brunnenring, dann wird die Vorrichtung 1, insbesondere die mindestens zwei Auslegerarme 3a, 3b, um die Höhe des Hindernisses angehoben. Bei Regelung der Feldspritze über den Brunnenring kann zugleich die Geschwindigkeit des Fahrzeugs beeinflusst werden, ohne dass der gesamte Arbeitsprozess der Feldspritze unterbrochen werden muss. Eine reduzierte Fahrgeschwindigkeit sorgt dafür, dass die Feldspritze sicher um die Höhe des vorausliegenden Hindernisses angehoben werden kann. Kollisionen mit Hindernissen können aufgrund einer derartigen Regelung der Feldspritze vermieden werden. Die Fahrgeschwindigkeit des Trägerfahrzeugs kann bspw. um ca. 30% oder auch um bis zu 60% reduziert werden, wobei diese Geschwindigkeitsreduzierungen insbesondere nach der Ausgangsgeschwindigkeit sowie ggf. nach der Art des Hindernisses richten können. Bei einer höheren Ausgangsgeschwindigkeit ist eine stärkere Reduzierung der Fahrgeschwindigkeit während der Kollisionsvermeidungs-Regelung sinnvoll, während bei einer niedrigeren Fahrgeschwindigkeit auch eine geringere Geschwindigkeitsreduzierung von ggf. weniger als 30% sinnvoll sein kann.

Das definierte Verschwenken der mindestens zwei Auslegerarme 3a, 3b beruht auf einer Steuerung und einem Abgleich von wenigstens zwei Regelsystemen. Die wenigstens zwei Regelsysteme setzen sich aus dem Regelkreis des Laserscanners 17 und aus dem Regelkreis der ersten Sensoren 9a, 9b, insbesondere der Ultraschallsensoren 10 zusammen. Der Laserscanner 17 erfasst den Bestand vor dem Fahrzeug, während die Ultraschallsensoren 10a, 10b den Abstand zwischen Gestänge bzw. den wenigstens zwei Auslegerarmen 3a, 3b und Bestand messen. So kann aus der erfassten Bestandskontur und der momentanen Stellung der Vorrichtung 1 der theoretische Abstand zwischen Vorrichtung 1 und Bestand bestimmt werden. Weichen diese beiden Werte voneinander ab, hat ein Ausgleich der Differenz zwischen diesen Werten zu erfolgen.

Die Messwerte der ersten Sensoren 9a, 9b bzw. der Ultraschallsensoren 10a, 10b dienen, wie bereits oben erwähnt, lediglich der Kontrolle und können bei vorliegender Erfindung übersteuert bzw. ignoriert werden. Die Messwerte der Ultraschallsensoren 10a, 10b werden insbesondere dann übersteuert, wenn sich im Bereich der Ultraschallsensoren 101, 10b eine Bestandslücke befindet. Das Flächenmodell stellt nun die maßgebende Größe dar. Der Fahrer muss nicht mehr aktiv eingreifen, sondern die Vorrichtung 1 wird automatisch über diesen Bereich gesteuert.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 3: Auslegerarm
- 3a: Auslegerarm, linker Auslegerarm
- 3b: Auslegerarm, rechter Auslegerarm
- 5: Schwenkachse
- 7: Stellglied
- 8: Hydraulikzylinder
- 9: erster Sensor
- 10: Ultraschallsensor
- 11: zweiter Sensor
- 13: Lasersensor
- 15: Mittelteil
- 17: Laserscanner
- 20: Bodenfläche

- S: Steuerungseinrichtung

## Patentansprüche

1. Vorrichtung (1) zum Ausbringen von Flüssigkeiten, wie Düngemittel oder dergleichen, aufweisend
- wenigstens zwei Auslegerarme (3a, 3b) mit jeweils mehreren Mitteln zum Verteilen der Flüssigkeit, welche wenigstens zwei Auslegerarme (3a, 3b) um eine oder mehrere ungefähr parallel zu einer Fahrtrichtung der Vorrichtung verlaufende Achsen (5a, 5b) schwenkbar sind,
- ein oder mehrere Stellglieder (7a, 7b), die mit den wenigstens zwei Auslegerarmen (3a, 3b) in Verbindung stehen und eine Stellkraft für eine Schwenkbewegung auf die wenigstens zwei Auslegerarme (3a, 3b) übertragen können,
- ein oder mehrere erste Sensoren (9a, 9b), mittels welcher ein relativer Ist-Abstand der wenigstens zwei Auslegerarme (3a, 3b) zu einem bodenseitigen Arbeitsbestand und/oder eine relative Neigungsposition der wenigstens zwei Auslegerarme (3a, 3b) gegenüber einer Horizontalen festgestellt werden kann und
- ein oder mehrere zweite Sensoren (11a, 11b), mittels welcher zumindest ein in Fahrtrichtung der Vorrichtung (1) vorauseilendes Umgebungsprofil erfasst werden kann, wobei
die ein oder mehreren ersten Sensoren (9a, 9b) und die ein oder mehreren zweiten Sensoren (11a, 11b) mit einer Steuerungseinrichtung (S) in Verbindung stehen, mittels welcher unter Berücksichtigung des durch die ein oder mehreren ersten Sensoren (9a, 9b) festgestellten Ist-Abstandes und/oder der relativen Neigungsposition und des durch die ein oder mehreren zweiten Sensoren (11a, 11b) erfassten Umgebungsprofils die ein oder mehreren Stellglieder (7a, 7b) für eine definierte Schwenkbewegung der wenigstens zwei Auslegerarme (3a, 3b) ansteuerbar sind, und
- ein oder mehrere Scanner, mittels welcher zumindest ein in Fahrtrichtung der Vorrichtung (1) vorauseilendes Umfeld über die gesamte Arbeitsbreite abtastbar ist und in Abhängigkeit der erfassten Daten ein Flächenmodell erstellbar ist, **dadurch gekennzeichnet, dass** wobei die ein oder mehreren Scanner mit der Steuerungseinrichtung (S) in Verbindung stehen, mittels welcher in Abhängigkeit des Flächenmodells die wenigstens zwei Auslegerarme (3a, 3b) voreinstellbar sind und bei Bedarf ein Steuersignal der ein oder mehreren ersten Sensoren (9a, 9b) übersteuerbar ist.

2. Vorrichtung nach Anspruch 1, wobei die ein oder mehreren ersten Sensoren (9a, 9b) wenigstens einen Ultraschallsensor (10a, 10b) umfassen.

3. Vorrichtung nach Anspruch 1 oder Anspruch 2, wobei die ein oder mehreren zweiten Sensoren (11a, 11b) wenigstens einen Lasersensor (13a, 13b) umfassen.

4. Vorrichtung nach einem oder mehreren der Ansprüche 1 bis 3, bei welcher ein oder mehrere zweite Sensoren (11a, 11b) direkt an einem oder mehreren der wenigstens zwei Auslegerarme (3a, 3b) angeordnet sind.

5. Vorrichtung nach einem oder mehreren der Ansprüche 1 bis 4, wobei die ein oder mehreren Scanner auf dem Dach eines Selbstfahrers oder eines landwirtschaftlichen Zugfahrzeugs positioniert sind.

6. Vorrichtung nach einem oder mehreren der Ansprüche 1 bis 5, wobei die ein oder mehreren Scanner wenigstens einen Laserscanner (17) umfassen.

7. Vorrichtung nach Anspruch 6, wobei das erzeugte Flächenmodell auf einem Bildschirm ausgebbar ist, und wobei ein Warnhinweis erscheint, wenn der Laserscanner (17) ein über den Bestand herausragendes Hindernis von besonders hoher Höhe detektiert und daraus eine Kollisionsgefahr erkennt.

8. Verfahren zur Bewegungssteuerung wenigstens zweier Auslegerarme (3a, 3b) einer landwirtschaftlichen Feldspritze mit einer Vorrichtung zum Ausbringen von Flüssigkeiten wie Düngemittel oder dergleichen gemäß einem der Ansprüche 1 bis 7, umfassend folgende Schritte:
- Abtasten und Erfassen zumindest eines der Feldspritze in Fahrtrichtung vorauseilenden Umfelds über die gesamte Arbeitsbreite mittels ein oder mehrerer Scannereinheiten;
- Erzeugung eines Flächenmodells in Abhängigkeit der erfassten Daten von den ein oder mehreren Scannereinheiten;
- Voreinstellen der Feldspritze in Abhängigkeit des erzeugten Flächenmodells;
- definiertes Verschwenken der wenigstens zwei Auslegerarme (3a, 3b) unter Berücksichtigung des der Feldspritze in Fahrtrichtung vorauseilenden Umfelds,
- Kontrolle des definierten Verschwenkens der wenigstens zwei Auslegerarme (3a, 3b) über Feststellen eines relativen Ist-Abstandes der wenigstens zwei Auslegerarme (3a, 3b) zu einem bodenseitigen Arbeitsbestand und/oder einer relativen Neigungsposition der wenigstens zwei Auslegerarme (3a, 3b) gegenüber einer Horizontalen und über Erfassen zumindest eines der Feldspritze in Fahrtrichtung vorauseilenden Umgebungsprofils, bei welchem die mindestens zwei Auslegerarme (3a, 3b) in Abhängigkeit des mittels des ein oder mehreren Scannereinheiten erzeugten Flächenmodells übersteuert werden.

9. Verfahren nach Anspruch 8, bei welchem das der Feldspritze in Fahrtrichtung vorauseilende Umgebungsprofil durch mindestens einen Lasersensor (13a, 13b) erfasst wird, wobei vorzugsweise ein Sender des mindestens einen Lasersensors (13a, 13b) einen zumindest näherungsweise horizontal orientierten Laserstrahl emittiert.

10. Verfahren nach Anspruch 8 oder 9, bei welchem der relative Ist-Abstand der wenigstens zwei Auslegerarme (3a, 3b) zum bodenseitigen Arbeitsbestand über mehrere an den wenigstens zwei Auslegeramen (3a, 3b) angeordnete Ultraschallsensoren (10a, 10b) festgestellt wird.

11. Verfahren nach einem oder mehreren der Ansprüche 8 bis 10, bei welchem zumindest das der Feldspritze in Fahrrichtung vorauseilende Umfeld über die gesamte Arbeitsbreite durch mindestens einen Laserscanner (17) detektiert wird.

12. Verfahren nach Anspruch 11, welchem das vorauseilende Umfeld mittels des Laserscanners (17) annähernd 20 Meter nach links bzw. rechts sowie circa 15 Meter nach vorne detektiert wird.

13. Verfahren nach einem oder mehreren der Ansprüche 8 bis 12, bei welchem mittels des Flächenmodells das Geländerelief umfassend Fahrgassen oder Unregelmäßigkeiten wie Lücken oder Hindernisse abgebildet wird.

14. Verfahren nach einem oder mehreren der Ansprüche 8 bis 13, bei welchem das Flächenmodell mittels eines Bildschirms ausgegeben wird.

15. Verfahren nach einem oder mehreren der Ansprüche 8 bis 14, bei welchem je nach Flächenmodell ein Warnhinweis mittels eines Bildschirms ausgegeben wird.

16. Verfahren nach einem der Ansprüche 8 bis 15, bei dem zumindest während eines definierten Verschwenkvorganges oder in Vorbereitung des Verschwenkvorganges zumindest eines der wenigstens zwei Auslegerarme (3a, 3b) unter Berücksichtigung des der Feldspritze in Fahrtrichtung vorauseilenden Umfelds eine Fahrgeschwindigkeit der Feldspritze (1) bzw. eines Trägerfahrzeuges für die Feldspritze (1) reduziert wird.

## Claims

1. A device (1) used to spread liquids, such as fertilizers or the like, having
- at least two cantilever arms (3a, 3b), each with a plurality of means used to distribute the liquid, which at least two cantilever arms (3a, 3b) are pivotable about one or more axes (5a, 5b) running approximately parallel to a driving direction of the device;
- one or more actuators (7a, 7b), which are connected to the at least two cantilever arms (3a, 3b), and which can transmit an actuating force for a pivoting movement onto the at least two cantilever arms (3a, 3b);
- one or more first sensors (9a, 9b) by means of which a relative actual spacing of the at least two cantilever arms (3a, 3b) to a ground-side crop to be treated and/or a relative tilt position of the at least two cantilever arms (3a, 3b) in relation to a horizontal can be determined; and
- one or more second sensors (11a, 11b), by means of which an environmental profile, at least preceding in driving direction of the device (1), can be detected; wherein
the one or more first sensors (9a, 9b) and the one or more second sensors (11a, 11b) are connected to a control apparatus (S), by means of which the one or more actuators (7a, 7b) are controllable for a defined pivoting movement of the at least two cantilever arms (3a, 3b) in consideration of the actual spacing and/or of the relative tilt position determined by the one or more first sensors (9a, 9b) and in consideration of the environmental profile detected by the one or more second sensors (11a, 11b); and
- one or more scanners, by means of which a surrounding, at least preceding the device (1) in driving direction, is scannable across the entire working width and a surface model is generatable based on the detected data, **characterised in that** the one or more scanners are connected to the control apparatus (S) by means of which the at least two cantilever arms (3a, 3b) are presettable based on the surface model, and a control signal from the one or more first sensors (9a, 9b) is overridable, if required.

2. The device according to claim 1, wherein the one or more first sensors (9a, 9b) comprise at least one ultrasonic sensor (10a, 10b).

3. The device according to claim 1 or claim 2, wherein the one or more second sensors (11a, 11b) comprise at least one laser sensor (13a, 13b).

4. The device according to one or more of the claims 1 to 3, in which one or more second sensors (11a, 11b) are arranged directly on one or more of the at least two cantilever arms (3a, 3b).

5. The device according to one or more of the claims 1 to 4, wherein the one or more scanners are positioned on the roof of a self-propelled vehicle or of an agricultural towing vehicle.

6. The device according to one or more of the claims 1 to 5, wherein the one or more scanners comprise at least one laser scanner (17).

7. The device according to claim 6, wherein the generated surface model is outputable to a display, and wherein a warning is issued when the laser scanner (17) detects an obstacle protruding particularly high from the crop and identifies a risk of collision therefrom.

8. A method for the movement control of at least two cantilever arms (3a, 3b) of an agricultural field sprayer with a device according to one of the claims 1 to 7 that is used to spread liquids, such as fertilizers or the like, the method comprising following steps:
- scanning and detecting a surrounding, at least preceding the field sprayer in driving direction, across the entire working width by means of one or more scanner units;
- generating a surface model based on the detected data from the one or more scanner units;
- presetting the field sprayer based on the generated surface model;
- defined pivoting of the at least two cantilever arms (3a, 3b) in consideration of the surrounding preceding the field sprayer in driving direction; and
- monitoring the defined pivoting of the at least two cantilever arms (3a, 3b) by way of determining a relative actual spacing of the at least two cantilever arms (3a, 3b) to a ground-side crop to be treated and/or a relative tilt position of the at least two cantilever arms (3a, 3b) in relation to a horizontal, and by way of detecting an environmental profile, at least preceding the field sprayer in driving direction, in which method the at least two cantilever arms (3a, 3b) are overridden based on the surface model generated by means of one or more scanner units.

9. The method according to claim 8, in which the environmental profile preceding the field sprayer in driving direction is detected by at least one laser sensor (13a, 13b), wherein preferably a transmitter of the at least one laser sensor (13a, 13b) emits an at least approximately horizontally oriented laser beam.

10. The method according to claim 8 or 9, in which the relative actual spacing of the at least two cantilever arms (3a, 3b) to the ground-side crop to be treated is determined by way of a plurality of ultrasonic sensors (10a, 10b) arranged on the at least two cantilever arms (3a, 3b).

11. The method according to one or more of the claims 8 to 10, in which the surrounding, at least preceding the field sprayer in driving direction, is detected across the entire working width by at least one laser scanner (17).

12. The method according to claim 11, in which the preceding surrounding is detected by means of the laser scanner (17) approximately 20 meters to the left and approximately 20 meters to the right as well as approximately 15 meters to the front.

13. The method according to one or more of the claims 8 to 12, in which the terrain relief, comprising driving lanes or irregularities, such as gaps or obstacles, is mapped by means of the surface model.

14. The method according to one or more of the claims 8 to 13, in which the surface model is output by means of a display.

15. The method according to one or more of the claims 8 to 14, in which a warning is issued by means of a display according to surface model.

16. The method according to one of the claims 8 to 15, in which a driving speed of the field sprayer (1) or of a carrier vehicle for the field sprayer (1), as applicable, is reduced, in consideration of the surrounding preceding the field sprayer in driving direction, at least during a defined pivoting process or in preparation of the pivoting process of at least one of the at least two cantilever arms (3a, 3b).

## Revendications

1. Dispositif (1) pour épandre des liquides tels que des engrais ou équivalents, présentant
- au moins deux bras (3a, 3b) dotés chacun de plusieurs moyens pour répartir le liquide, lesdits au moins deux bras (3a, 3b) étant susceptibles d'être pivotés autour d'un ou de plusieurs axes (5a, 5b) approximativement parallèles à un sens de la marche dudit dispositif,
- un ou plusieurs actionneurs (7a, 7b) qui sont reliés auxdits au moins deux bras (3a, 3b) et qui peuvent transmettre auxdits au moins deux bras (3a, 3b) une force de commande pour un mouvement de pivot,
- un ou plusieurs premiers capteurs (9a, 9b) au moyen desquels il est possible de constater une distance réelle relative desdits au moins deux bras (3a, 3b) par rapport à un stock de travail au sol et/ou une inclinaison relative desdits au moins deux bras (3a, 3b) par rapport à une ligne horizontale et
- un ou plusieurs deuxièmes capteurs (11a, 11b) au moyen desquels il est possible de recueillir au moins un profil d'environnement en amont, dans le sens de la marche, du dispositif (1),
lesdits un ou plusieurs premiers capteurs (9a, 9b) et lesdits un ou plusieurs deuxièmes capteurs (11a, 11b) étant reliés à un organe de commande (S) au moyen duquel, compte tenu de la distance réelle constatée par lesdits un ou plusieurs premiers capteurs (9a, 9b) et/ou de l'inclinaison relative et du profil d'environnement recueilli par lesdits un ou plusieurs deuxièmes capteurs (11a, 11b), lesdits un ou plusieurs actionneurs (7a, 7b) sont susceptibles d'être commandés pour un mouvement de pivot défini desdits au moins deux bras (3a, 3b), et
- un ou plusieurs scanners, au moyen desquels au moins un milieu en amont, dans le sens de la marche du dispositif (1), est susceptible d'être balayé sur toute la largeur de travail et, en fonction des données recueillies, un modèle de surface est susceptible d'être créé, **caractérisé en ce que** lesdits un ou plusieurs scanners sont reliés à l'organe de commande (S) au moyen duquel, en fonction du modèle de surface, lesdits au moins deux bras (3a, 3b) sont susceptibles d'être réglés au préalable et, si besoin est, un signal de commande desdits un ou plusieurs premiers capteurs (9a, 9b) est susceptible d'être commandé en marche forcée.

2. Dispositif selon la revendication 1, lesdits un ou plusieurs premiers capteurs (9a, 9b) comprenant au moins un capteur à ultrasons (10a, 10b).

3. Dispositif selon la revendication 1 ou la revendication 2, lesdits un ou plusieurs deuxièmes capteurs (11a, 11b) comprenant au moins un capteur laser (13a, 13b).

4. Dispositif selon l'une quelconque ou plusieurs des revendications 1 à 3, dans lequel un ou plusieurs deuxièmes capteurs (11a, 11b) sont agencés directement sur un ou plusieurs desdits au moins deux bras (3a, 3b).

5. Dispositif selon l'une quelconque ou plusieurs des revendications 1 à 4, lesdits un ou plusieurs scanners étant positionnés sur le toit d'un engin automoteur ou d'un véhicule tracteur agricole.

6. Dispositif selon l'une quelconque ou plusieurs des revendications 1 à 5, lesdits un ou plusieurs scanners comprenant au moins un scanner laser (17).

7. Dispositif selon la revendication 6, le modèle de surface créé étant susceptible d'être affiché sur un écran et un avertissement apparaissant lorsque le scanner laser (17) détecte un obstacle particulièrement haut saillant au-dessus du stock de travail et en déduit un risque de collision.

8. Procédé de commande de mouvement d'au moins deux bras (3a, 3b) d'un pulvérisateur agricole doté d'un dispositif destiné à l'épandage de liquides tels que des engrais ou équivalents selon l'une quelconque des revendications 1 à 7, comprenant les étapes suivantes :
- balayage et détection d'au moins un milieu en amont du pulvérisateur agricole, dans le sens de la marche, sur toute la largeur de travail au moyen d'une ou de plusieurs unités de scanner ;
- création d'un modèle de surface en fonction des données recueillies par lesdites une ou plusieurs unités de scanner ;
- préréglage du pulvérisateur agricole en fonction du modèle de surface créé ;
- pivotage défini des au moins deux bras (3a, 3b) compte tenu du milieu en amont, dans le sens de la marche, du pulvérisateur agricole,
- contrôle du pivotage défini des au moins deux bras (3a, 3b) par constatation d'une distance réelle relative des au moins deux bras (3a, 3b) par rapport à un stock de travail au sol et/ou d'une inclinaison relative des au moins deux bras (3a, 3b) par rapport à une ligne horizontale, et par détection d'au moins un profil d'environnement en amont du pulvérisateur agricole, dans le sens de la marche, dans lequel les au moins deux bras (3a, 3b) sont commandés en marche forcée en fonction du modèle de surface créé au moyen desdites une ou plusieurs unités scanner.

9. Procédé selon la revendication 8, dans lequel le profil d'environnement en amont du pulvérisateur agricole, dans le sens de la marche, est détecté par au moins un capteur laser (13a, 13b), de préférence un émetteur dudit au moins un capteur laser (13a, 13b) émettant un faisceau laser au moins orienté approximativement à l'horizontale.

10. Procédé selon la revendication 8 ou 9, dans lequel la distance réelle relative desdits au moins deux bras (3a, 3b) par rapport au stock de travail sur le sol est constatée par plusieurs capteurs à ultrasons (10a, 10b) agencés sur lesdits au moins deux bras (3a, 3b).

11. Procédé selon l'une quelconque ou plusieurs des revendications 8 à 10, dans lequel le milieu en amont du pulvérisateur agricole, dans le sens de la marche, est détecté sur toute la largeur de travail par au moins un scanner laser (17).

12. Procédé selon la revendication 11, dans lequel le milieu en amont est détecté au moyen du scanner laser (17) approximativement 20 mètres vers la gauche ou la droite ainsi qu'environ 15 mètres en avant.

13. Procédé selon l'une quelconque ou plusieurs des revendications 8 à 12, dans lequel le relief du terrain, comprenant des voies ou des irrégularités telles que des trous ou des obstacles, est reproduit au moyen du modèle de surface.

14. Procédé selon l'une quelconque ou plusieurs des revendications 8 à 13, dans lequel le modèle de surface est affiché au moyen d'un écran.

15. Procédé selon l'une quelconque ou plusieurs des revendications 8 à 14, dans lequel est émis un avertissement, en fonction du modèle de surface et au moyen d'un écran.

16. Procédé selon l'une quelconque des revendications 8 à 15, dans lequel une vitesse de marche du pulvérisateur (1) ou d'un véhicule porteur pour le pulvérisateur agricole (1) est réduite au moins au cours d'une opération de pivotage définie, ou en préparation de cette opération de pivotage, d'au moins un desdits au moins deux bras (3a, 3b) et compte tenu du milieu en amont, dans le sens de la marche, du pulvérisateur agricole.
